# EUROPEAN PATENT SPECIFICATION

(11) **EP 2 862 775 B1**
(45) Date of publication and mention of the grant of the patent: **13.07.2016**
(21) Application number: 13189380.2
(22) Date of filing: 18.10.2013
(51) Int. Cl.: B61D 33/00, B60N 2/24, B60N 2/30

(54) **Arrangement having seats for a plurality of vehicle passengers and method for producing the arrangement**
Anordnung mit Sitzen für eine Vielzahl von Fahrzeuginsassen und Verfahren zur Herstellung der Anordnung
Agencement comprenant une pluralité de sièges de passagers de véhicule et procédé de fabrication de l'agencement

(43) Date of publication of application: 22.04.2015
(73) Proprietor: Bombardier Transportation GmbH, 10785 Berlin (DE)
(72) Inventor: Butterfield, Richard, Derby, Derbyshire DE22 1GX (GB); Griggs, Paul, Ambergate, Derbyshire DE56 2JL (GB)
(74) Representative: Brunotte, Joachim Wilhelm Eberhard

(56) References cited:
- EP-A1- 0 065 494
- EP-A1- 1 127 788
- WO-A1-2007/141054
- GB-A- 1 551 764

## Description

The invention relates to an arrangement having seats for a plurality of vehicle passengers, in particular for public transport vehicles, such as trams. The invention also relates to a method for producing such an arrangement.

Especially for rail vehicles and busses it is known to provide the interior of the vehicle with seats that are only temporarily in a state in which the seat can be used. If not to be used, the seat can be folded up so as to enlarge the room for standing passengers. This type of seat is called "tip up seat". Usually, they require a wall or similar structure which supports the weight of the seat and the passenger which is resting on the seat. Consequently, tip up seats are typically positioned next to the side walls of the vehicle's car body or at the front or back end of a passenger compartment, which may be partially open to the remainder of the vehicle's interior or may be closed by a door. Therefore, the flexibility of selecting positions for tip up seats is restricted and the effort for manufacturing and mounting the supporting structure is comparatively high.

Alternatively tip up seats can be fixed directly onto the floor, as disclosed for example in WO 2007/141 054 A1 (corresponding to the preamble of independent product claim 1 or 5). However, a plurality of seats forms obstacles for passengers entering and leaving the vehicle, especially if the seats are not located at a wall.

GB 1 551 764 A describes a seat assembly comprising a squab and a frame structure, the squab comprising a seat portion.

EP 1 127 788 A1 describes a passenger transport device in a passenger cabin of an airplane. The passenger transport device is formed as at least one stance.

EP 0 065 494 A1 describes a motor vehicle in which the passengers are located in a fishbone geometry.

It is an object of the present invention to provide an arrangement having seats for a plurality of persons, which can be re-arranged in a simple manner so as to increase room for standing passengers, which requires less effort for mounting the arrangement within the interior of a vehicle and which can be positioned next to a wall or at a distance to a wall, in particular in the center of passenger's standing area. It is a further object of the invention to provide a method for producing such an arrangement.

The invention is defined by the technical features set forth in independent product claims 1 and 5 as well as by the method steps as defined in corresponding independent method claims 10 and 11, respectively. Additional features or method steps of the invention are disclosed in the dependent claims.

According to a basic idea of the present invention, a plurality of seat elements is movably connected to each other so that the seat elements can be distributed over a region within the vehicle's interior, wherein at least one passenger can rest on each of the seat elements. Furthermore, the seat elements can be moved relatively to each other so that the room or space for standing passenger is increased. In this state of the arrangement, less passengers or even no passenger are/is able to rest on the seats of the arrangement. This means that the dimensions of the arrangement can be expanded into an expanded state and diminished into a diminished state.

Therefore, the arrangement can be brought into the expanded state, when the passenger occupancy is small. In the expanded state, the arrangement does not form a relevant obstacle to passengers. Furthermore, the arrangement can be brought into the diminished state, when the passenger occupancy is large. Again, since the (outer) dimensions of the arrangement are small in this state, the arrangement does not form a relevant obstacle to passengers. In both cases, passengers entering or leaving the vehicle can walk around or next to the arrangement so that the arrangement is present, but not an obstacle which significantly delays or even prevents passengers from entering or leaving the vehicle quickly. This is in contrast to plural tip up seats, which are individually and separately supported by pillars or by similar vertical structures on the floor.

In particular, an arrangement is proposed which arrangement has seats for a plurality of vehicle passengers, in particular for public transport vehicles, wherein
- the seats are formed by in each case one seat element defining a surface or surfaces on which a person can rest,
- the seat elements extend in a longitudinal direction, thereby defining a first end region and a second end region, the first and second end region are located at ends of the seat element which are opposite to each other with respect to the longitudinal direction,
- at least two of the seat elements are movably connected in each case to one or two neighboring seat element(s) with the connection being in the first or second end regions of the seat elements,
- the arrangement comprises a first state, in which a first and a second of the seat elements, which are neighboring seat elements movably connected to each other, define a first angle between their longitudinal directions, so that a first person can rest on the first seat element and a second person can rest on the second seat element,
- the arrangement comprises a second state, into which the first and the second seat elements can be moved relatively to each other from the first state and in which the first and the second seat elements define a second angle between their longitudinal directions, the second angle being smaller than the first angle, so that a first person can rest on the first seat element and at the same time also on the second seat element.

In addition an arrangement is proposed, which arrangement has seats for a plurality of vehicle passengers, in particular for public transport vehicles, wherein
- the seats are formed by in each case one seat element defining a surface or surfaces on which a person can rest,
- the seat elements extend in a longitudinal direction, thereby defining a first end region and a second end region, the first and second end region are located at ends of the seat element which are opposite to each other with respect to the longitudinal direction,
- at least three of the seat elements are movably connected in each case to one or two neighboring seat element(s) with the connection being in the first or second end regions of the seat elements,
- a first of the seat elements is movably connected to a second of the seat elements in the second end region of the first seat element and in the first end region of the second seat element,
- the second of the seat elements is movably connected to a third of the seat elements in the second end region of the second seat element and in the first end region of the third seat element,
- the arrangement comprises a first state, in which the first, the second and the third seat elements define first angles in each case between the longitudinal directions of the respective neighboring seat elements, so that a first person can rest on the first seat element, a second person can rest on the second seat element and a third person can rest on the third seat element,
- the arrangement comprises a second state, into which the first, the second and the third seat elements can be moved relatively to each other from the first state and in which the first, the second and the third seat elements define second angles in each case between the longitudinal directions of the respective neighboring seat elements, the second angles being smaller than the first angle, so that no person can sit or lean on the second seat element without also sitting or leaning on the first and/or third seat element.

Furthermore, corresponding methods are proposed for producing the arrangements. The features of the methods are defined by the attached claims and features of specific method embodiments follow from the description of the arrangement.

At least one of the seat elements may be supported by a support extending from the seat element downwards to a base to be connected with a floor. The base may be part of the support. This kind of supporting the seat element is particularly stable and easy to be mounted.

The movable connection of at least two neighboring seat elements may be formed by a hinge. Preferably, the axis of rotation, which is defined by the hinge, extends in vertical direction if the arrangement is mounted to the vehicle. Therefore, the dimensions of the arrangement in a direction parallel to the vehicle's floor can be extended and diminished easily.

A protrusion may extend upwards from the hinge and/or as part of the hinge, thereby delimiting the regions where a person can rest on the two neighboring seat elements. In this manner, the hinge can be protected against influences from above (such as dirt and mechanical obstruction) and the protrusion can prevent a passenger resting on the seat from slipping off the seat in the lateral direction.

In particular, if viewed from above, the individual seats of the arrangement may be arranged in a zig-zag manner or sawtooth-like manner in the expanded state. This means that the individual seats can be compared with chain links of a chain-like configuration. Each chain link or seat is movably connected to two neighboring chain links or seats at opposite ends of the chain link or seat, except for the chain links or seats at the end of the arrangement, which are connected to only one neighboring chain link or seat. Preferably, in each case two neighboring seats can be rotated relatively to each other around a common rotating axis, which may be formed by a hinge. Preferably, the rotating axis extends from top to bottom, i.e. is perpendicular to the floor if the arrangement is mounted within a vehicle.

The zig-zag configuration has been mentioned as the expanded state of the arrangement. However, it is possible that the fully expanded state comprises seats which are aligned along a straight line, i.e. the angle between two neighboring seats is 180°.

Preferably, the arrangement does not have two states only, namely one diminished state and one expanded state. Rather, the arrangement may have one or plural intermediate states in which the outer dimensions of the arrangement are in between the dimensions of the diminished and the expanded state. In particular, it is preferred that each angle between two neighboring seats can be adjusted individually and independently of the angles between the other neighboring seats. In addition or alternatively, an angle between two neighboring seats can be adjusted to any value within a range of angles, such as a range from 0°to a maximum value, for example the maximum value may be at least 70°, preferably at least 80° and most preferred at least 90°. The minimum value of the range of angles may be larger than 0°, for example may be smaller than 20°, and preferably smaller than 10°. In particular, the minimum value of the range of angles depends on the dimensions of the individual seats.

The seat elements and, thereby, also any passenger resting on a seat of the arrangement, can be supported by any suitable structure, in particular at least one columnar structure, which is fixed and/or connected to the floor, to a wall (interior wall separating different parts of the vehicle's interior or outer wall of the vehicle) and/or to the ceiling of the vehicle's interior.

Directly supporting the seat elements or the arrangement on the floor by support structures which extend from the floor to the arrangement has the advantage that the arrangement can be placed in the middle of a standing area for passengers. The same applies in the case of a carrier which is fixed to the ceiling.

In addition or alternatively to supporting the arrangement by vertically extending support structures, the arrangement can be fixed to a wall of the vehicle, such as the outer wall of a car body. Therefore, the arrangement cannot be placed in the middle of the passenger standing area, but next to the wall.

Each individual support element can be either fixed to the floor or wall or, alternatively, can be in contact with the floor or wall only. For example, one support structure can be fixed to the floor and at least one additional support structure can support the arrangement in the extended state onto the floor, but is not fixed to the floor. This facilitates changing the extended state to another extended state, to an intermediate state or to the diminished state.

In particular, a guidance can be connected to the floor, wall or ceiling of the vehicle's interior, either directly or indirectly. At least one of the seats of the arrangement is combined with the guidance so that the guidance guides a movement of the seat, while the state of the arrangement is changed. In particular, such a guidance may be integrated in a wall and may be adapted to guide a horizontal movement of at least one of the seats. If a guidance is integrated in the floor, it may guide the movement of a vertically extending support structure which supports at least one of the seats of the arrangement. The guidance may be a rail, for example.

According to a variant, more guidances of the type mentioned above can be provided and can be used.

In addition or alternatively, at least one of the seats can be temporarily fixed to a structure of the vehicle which is not part of the extendable seat arrangement. The temporary fixation can optionally be interlocked. This increases safety with respect to unintentional or undesired release of the fixation. The structure to which the at least one seat can be temporarily fixed may be a wall, floor, ceiling and/or support structure of the vehicle. In particular, it is possible to fix one end chain link or the two opposite end chain links of the extendable seat arrangement in this manner.

The invention also relates to a vehicle comprising the extendable seat arrangement and to a method for producing such a vehicle. In particular, the vehicle may be a rail vehicle, such as an extra-wide rail vehicle having a width of more than 2.9 m, in particular more than 3.1 m.

Examples of the invention will be described with reference to the attached drawing. The figures of the drawing show:
- Fig. 1: a perspective view of an extendable seat arrangement in the diminished state,
- Fig. 2: a perspective view of the arrangement of Fig. 1 in the expanded state or in an intermediate state,
- Fig. 3: the outline of a passenger resting on the arrangement shown in Fig. 1 and Fig. 2 in the diminished state,
- Fig. 4: schematically a sectional view along the line A - A in Fig. 1 through the extendable seat arrangement in the diminished state,
- Fig. 5: schematically a top view of a seat arrangement having two seat elements which can be rotated around a common rotating axis, wherein the figure shows an extended state in which the seat elements define an angle of about 90°,
- Fig. 6: a schematic top view of the arrangement shown in Fig. 5, wherein the seat elements define a minimum angle of less than 10°, corresponding to the diminished state of the seat arrangement,
- Fig. 7: schematically a top view onto an extendable seat arrangement having six seat elements in a chain-like configuration, wherein the arrangement is in the extended or in an intermediate state defining angles between neighboring seat elements of about 90°,
- Fig. 8: a schematic top view of the arrangement shown in Fig. 7 in the diminished state and
- Fig. 9: a top view onto a section of the interior of a vehicle comprising an extendable arrangement having a plurality of seats.

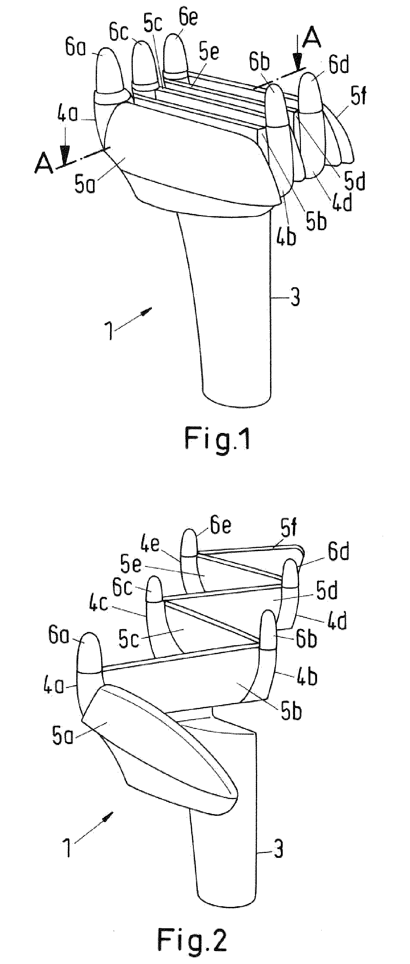

The extendable seat arrangement 1 shown in Fig. 1, Fig. 2 and Fig. 3 comprises six seat elements 5a to 5f in a chain-like configuration. Each of the seat elements 5 is connected to one or two neighboring seat elements via a hinge 4a to 4e.

The arrangement 1 is supported by a pillar 3 which is to be mounted on the floor of a vehicle's passenger room. Alternatively, there may be more pillars or other support structures for supporting the arrangement 1. In particular, at least one additional pillar can be used to support seat elements 5 in the extended state shown in Fig. 2 only, but not in the diminished state shown in Fig. 1. If the arrangement is brought from the extended state to the diminished state the additional pillar(s) is/are removed. Another option is to fix at least one end seat element 5a, 5f in the extended state shown in Fig. 2 to another object (not shown).

The extended state shown in Fig. 2 has a zig-zag configuration in which the longitudinal directions of the individual seat elements 5 follow a zig-zag path, if viewed from above. The extended state in Fig. 2 may be the only extended state intended, may be the fully extended state or may be an intermediate state (which means that the angles between the longitudinal directions of the seat elements 5 can be increased further).

The diminished state shown in Fig. 1 may correspond to angles between the longitudinal directions of neighboring seat elements 5 of 0°. Alternatively, the angles in the diminished state, i.e. the minimum possible angles, may be larger than 0°.

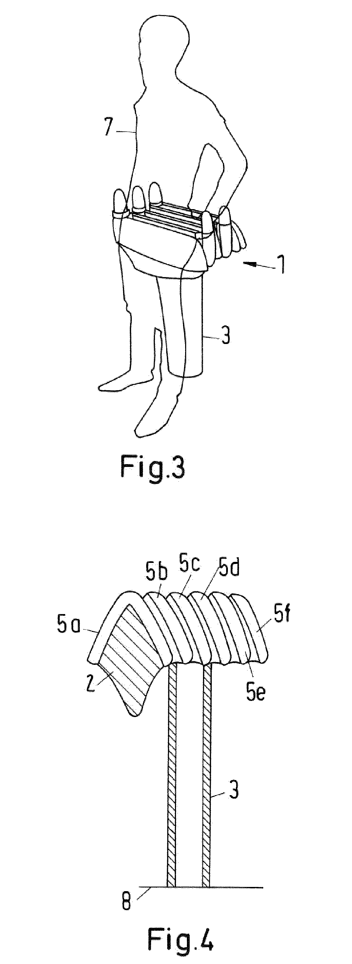

As shown in Fig. 3, the extendable seat arrangement may be fully occupied by one person 7 in the diminished state. In contrast, the extended or intermediate state shown in Fig. 2 provides seating areas for several passengers (not shown in Fig. 2).

The extendable seat arrangement 1 of Fig. 1 to Fig. 3 comprises in each case one protrusion 6a to 6e above the hinges 4a to 4e. Optionally, the protrusion 6 may contain a part of the hinge 4. In any case, the protrusion 6 delimits the seating area defined by the neighboring seat elements 5.

Preferably, as shown in the example of Fig. 1 to Fig. 3, the protrusion 6 above the hinge 4 tapers towards the top end. However, the top end is preferably rounded for safety reasons.

The schematic sectional view of Fig. 4 shows a specific embodiment of the arrangement 1 of Fig. 1 to Fig. 3. One seat element 5a at the end of the chain-like configuration is wider (in horizontal direction) than the other seat elements 5b to 5f. Furthermore, parts of the seating or leaning surfaces defined by the seat elements 5a to 5f are inclined so that the seating or leaning surfaces of the seat elements 5a to 5f can overlap each other (if viewed from the top). Therefore, very little space is required by the arrangement in the diminished state shown in Fig. 4 and one of the seat elements, namely seat element 5a, can be adapted to provide increased comfort due to padding or cushioning 2.

Fig. 4 also shows that it is possible to use a hollow pillar 3 as support structure for supporting the arrangement onto the floor 8.

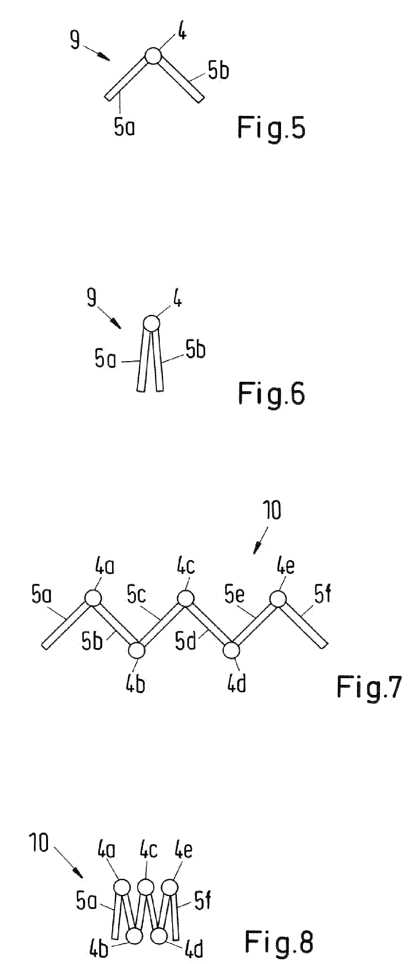

Fig. 5 to Fig. 8 illustrate alternative seat arrangement. The seat arrangement 9 shown in Fig. 5 and Fig. 6 comprises only two seat elements 5a, 5b which are neighboring seat elements connected to each other via a hinge 4. For example, in the fully extended state shown in Fig. 5, the angle between the neighboring seat elements 5a, 5b is about 90°. In the diminished state, the minimum angle between the seat elements 5a, 5b may be larger than 0°, as shown in Fig. 6.

The configuration illustrated by Fig. 7 and Fig. 8 is an example of the arrangement shown in Fig. 1 to Fig. 3. Again, the minimum angle in the diminished state (Fig. 8) may be larger than 0°. Other than shown in Fig. 7, where the angles between pairs of two neighboring seat elements 5a, 5b; 5b, 5c; 5c, 5d; 5d, 5e; 5e, 5f are equal, the hinges 4 may be operated independently of each other so that the angle between the neighboring seat elements 5 can be adjusted individually. Therefore, many different states (not shown) between the fully extended state and the diminished state can be adjusted.

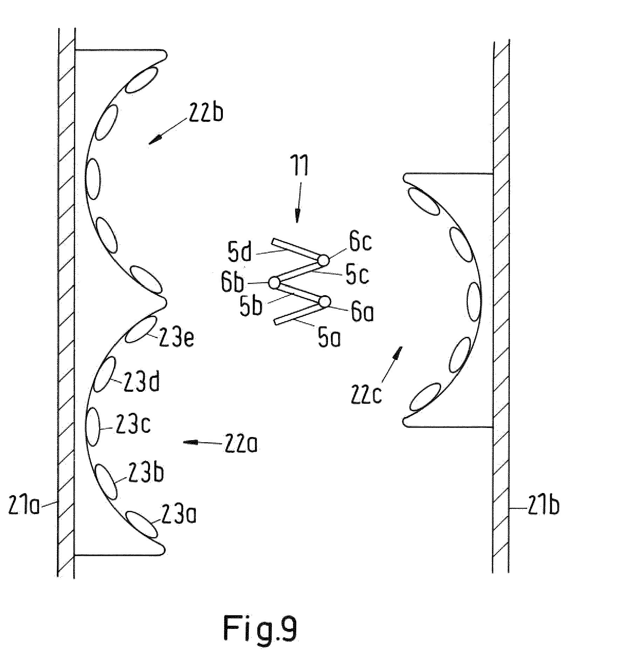

The top view of Fig. 9 shows a seat arrangement 11 in the middle of a passenger room. "Middle" means in particular that the arrangement 11 is located half way in between two opposite outer sidewalls 21 a, 21 b of a vehicle's car body. The car body may be an extra wide car body having a width of 2.9 m or wider.

In the specific embodiment of Fig. 9, there are other seating areas 22a, 22b, 22c along the outer sidewalls 21, 21 b having in each case a plurality of seats 23a to 23e as shown in case of the seating area 22a. According to an alternative embodiment (other than shown in Fig. 9) seating areas along the opposite outer sidewalls may be positioned directly visa-a-vis. In contrast, the seating area 22c on the right hand side of Fig. 9 faces parts of two opposite seating areas 22a, 22b.

The seat arrangement 11 in the middle of the passenger area comprises four seat elements 5a to 5d which are connected to their respective neighboring seat element 5 via a hinge 6a, 6b, 6c. Fig. 9 does not show the fully extended state, but an intermediate state of the seat arrangement 11.

In particular, the seats and as well the seat elements of any embodiment of the extendable seat arrangement can be designed to enable perch seating in the sense of a passenger's position between standing and sitting. In particular, as shown in Fig. 3, the passenger may lean on the seat arrangement while he or she transfers a part of his/her weight forces to the seat element or seat elements of the arrangement. Another part of the weight forces is directly transferred to the floor via the feet.

This kind of perch seating requires little space but still increases comfort for passengers. In addition, surfaces of the seat elements or seats can be very small (i.e. narrow) in the direction perpendicular to the longitudinal direction defined above. In particular, it is preferred that the dimensions of at least one seat element and preferably of all seat elements of the seat arrangement in two horizontal directions perpendicular to each other (parallel to the floor) are chosen in the following manner: the length (dimension in the first of the two directions) in the longitudinal direction mentioned above is at least three times larger than the width (dimension in the second of the two directions), preferably at least five times larger and most preferred at least seven times larger.

## Claims

1. An arrangement (1; 9; 10; 11) having seats for a plurality of vehicle passengers, in particular for public transport vehicles, wherein
- the seats are formed by in each case one seat element (5) defining a surface or surfaces on which a person can rest,
- the seat elements (5) extend in a longitudinal direction, thereby defining a first end region and a second end region, the first and second end region are located at ends of the seat element (5) which are opposite to each other with respect to the longitudinal direction,
**characterized in that**
- at least two of the seat elements (5) are movably connected in each case to one or two neighboring seat element(s) with the connection being in the first or second end regions of the seat elements (5),
- the arrangement comprises a first state, in which a first and a second of the seat elements (5), which are neighboring seat elements (5) movably connected to each other, define a first angle between their longitudinal directions, so that a first person can rest on the first seat element (5) and a second person can rest on the second seat element (5),
- the arrangement comprises a second state, into which the first and the second seat elements (5) can be moved relatively to each other from the first state and in which the first and the second seat elements (5) define a second angle between their longitudinal directions, the second angle being smaller than the first angle, so that a first person can rest on the first seat element (5) and at the same time also on the second seat element (5).

2. The arrangement of claim 1, wherein at least one of the seat elements (5) is supported by a support (3) extending from the seat element (5) downwards to a base to be connected with a floor (8).

3. The arrangement of claim 1 or 2, wherein the movable connection of at least two neighboring seat elements (5) is formed by a hinge (4).

4. The arrangement of claim 3, wherein a protrusion (5) extends upwards from the hinge (4) and/or as part of the hinge (4), thereby delimiting the regions where a person can rest on the two neighboring seat elements (5).

5. An arrangement (1; 10; 11) having seats for a plurality of vehicle passengers, in particular for public transport vehicles, wherein
- the seats are formed by in each case one seat element (5) defining a surface or surfaces on which a person can rest,
- the seat elements (5) extend in a longitudinal direction, thereby defining a first end region and a second end region, the first and second end region are located at ends of the seat element (5) which are opposite to each other with respect to the longitudinal direction,
**characterized in that**
- at least three of the seat elements (5) are movably connected in each case to one or two neighboring seat element(s) with the connection being in the first or second end regions of the seat elements (5),
- a first of the seat elements (5) is movably connected to a second of the seat elements (5) in the second end region of the first seat element (5) and in the first end region of the second seat element,
- the second of the seat elements (5) is movably connected to a third of the seat elements (5) in the second end region of the second seat element (5) and in the first end region of the third seat element,
- the arrangement comprises a first state, in which the first, the second and the third seat elements (5) define first angles in each case between the longitudinal directions of the respective neighboring seat elements (5), so that a first person can rest on the first seat element, a second person can rest on the second seat element (5) and a third person can rest on the third seat element,
- the arrangement comprises a second state, into which the first, the second and the third seat elements (5) can be moved relatively to each other from the first state and in which the first, the second and the third seat elements (5) define second angles in each case between the longitudinal directions of the respective neighboring seat elements (5), the second angles being smaller than the first angle, so that no person can sit or lean on the second seat element (5) without also sitting or leaning on the first and/or third seat element.

6. The arrangement of claim 5, wherein at least one of the seat elements (5) is supported by a support extending from the seat element (5) downwards to a base to be connected with a floor.

7. The arrangement of claim 5 or 6, wherein the movable connection of at least two neighboring seat elements (5) is formed by a hinge (4).

8. The arrangement of claim 7, wherein a protrusion (5) extends upwards from the hinge (4) and/or as part of the hinge (4), thereby delimiting the regions where a person can rest on the two neighboring seat elements (5).

9. A vehicle comprising the arrangement (11) of one of claims 1 to 8 in a room for transporting passengers.

10. A method for producing an arrangement (1; 9; 10; 11) having seats for a plurality of vehicle passengers, in particular for producing the arrangement of one of claims 1 to 4, wherein
- the seats are formed by in each case one seat element (5) defining a surface or surfaces on which a person can rest,
- the seat elements (5) are arranged so as to extend in a longitudinal direction, thereby defining a first end region and a second end region, the first and second end region are located at ends of the seat element (5) which are opposite to each other with respect to the longitudinal direction,
- at least two of the seat elements (5) are movably connected in each case to one or two neighboring seat element(s) with the connection being in the first or second end regions of the seat elements (5),
- the seat elements (5) are connected to each other so that they can be moved into a first state, in which a first and a second of the seat elements (5), which are neighboring seat elements (5) movably connected to each other, define a first angle between their longitudinal directions, so that a first person can rest on the first seat element (5) and a second person can rest on the second seat element,
- the seat elements (5) are connected to each other so that the first and the second seat elements (5) can be moved relatively to each other from the first state into a second state, in which the first and the second seat elements (5) define a second angle between their longitudinal directions, the second angle being smaller than the first angle, so that a first person can rest on the first seat element (5) and at the same time also on the second seat element.

11. A method for producing an arrangement (1; 10; 11) having seats for a plurality of vehicle passengers, in particular for producing the arrangement of one of claims 5 to 8, wherein
- the seats are formed by in each case one seat element (5) defining a surface or surfaces on which a person can rest,
- the seat elements (5) are arranged so as to extend in a longitudinal direction, thereby defining a first end region and a second end region, the first and second end region are located at ends of the seat element (5) which are opposite to each other with respect to the longitudinal direction,
- at least three of the seat elements (5) are movably connected in each case to one or two neighboring seat element(s) with the connection being in the first or second end regions of the seat elements (5),
- a first of the seat elements (5) is movably connected to a second of the seat elements (5) in the second end region of the first seat element (5) and in the first end region of the second seat element,
- the second of the seat elements (5) is movably connected to a third of the seat elements (5) in the second end region of the second seat element (5) and in the first end region of the third seat element,
- the seat elements (5) are connected to each other so that they can be moved into a first state, in which the first, the second and the third seat elements (5) define first angles in each case between the longitudinal directions of the respective neighboring seat elements (5), so that a first person can rest on the first seat element, a second person can rest on the second seat element (5) and a third person can rest on the third seat element,
- the seat elements (5) are connected to each other so that the first, the second and the third seat elements (5) can be moved relatively to each other from the first state into a second state, in which the first, the second and the third seat elements (5) define second angles in each case between the longitudinal directions of the respective neighboring seat elements (5), the second angles being smaller than the first angle, so that no person can sit or lean on the second seat element (5) without also sitting or leaning on the first and/or third seat element.

12. The method claim 10 or 11, wherein at least one of the seat elements (5) is supported by a support extending from the seat element (5) downwards to a base to be connected with a floor.

13. The method of one of claims 10 to 12, wherein the movable connection of at least two neighboring seat elements (5) is formed by a hinge (4).

14. The method of claim 13, wherein a protrusion (5) is formed so as to extend upwards from the hinge (4) and/or as part of the hinge (4), thereby delimiting the regions where a person can rest on the two neighboring seat elements (5).

15. A method of producing a vehicle including the method of one of claims 10 to 14, wherein the arrangement (11) is mounted within a room for transporting passengers.

## Patentansprüche

1. Anordnung (1; 9; 10; 11) mit Sitzen für mehrere Fahrzeuginsassen, insbesondere für Fahrzeuge des öffentlichen Verkehrs, wobei
- die Sitze durch in jedem Fall ein Sitzelement (5) gebildet sind, das eine Fläche oder Flächen definiert, auf der oder auf denen eine Person Platz nehmen kann,
- sich die Sitzelemente (5) in einer Längsrichtung erstrecken, wodurch sie eine erste Endzone und eine zweite Endzone definieren, wobei die erste und zweite Endzone an Enden des Sitzelements (5) angeordnet sind, die in Bezug auf die Längsrichtung einander gegenüberliegen,
**dadurch gekennzeichnet, dass**
- mindestens zwei der Sitzelemente (5) in jedem Fall bewegbar mit einem oder zwei benachbarten Sitzelement(en) verbunden sind, wobei sich die Verbindung in der ersten oder zweiten Endzone der Sitzelemente (5) befindet,
- die Anordnung einen ersten Zustand umfasst, in dem ein erstes und ein zweites der Sitzelemente (5), die bewegbar miteinander verbundene benachbarte Sitzelemente (5) sind, einen ersten Winkel zwischen ihren Längsrichtungen definieren, so dass eine erste Person auf dem ersten Sitzelement (5) Platz nehmen kann, und eine zweite Person auf dem zweiten Sitzelement (5) Platz nehmen kann,
- die Anordnung einen zweiten Zustand umfasst, in den das erste und das zweite Sitzelement (5) relativ zueinander aus dem ersten Zustand bewegt werden können, und in dem das erste und das zweite Sitzelement (5) einen zweiten Winkel zwischen ihren Längsrichtungen definieren, wobei der zweite Winkel kleiner ist als der erste Winkel, so dass eine erste Person auf dem ersten Sitzelement (5) und gleichzeitig auch auf dem zweiten Sitzelement (5) Platz nehmen kann.

2. Anordnung nach Anspruch 1,
wobei mindestens eines der Sitzelemente (5) von einem Träger (3) getragen wird, der sich von dem Sitzelement (5) nach unten zu einer Basis erstreckt, um mit einem Boden (8) verbunden zu werden.

3. Anordnung nach Anspruch 1 oder 2,
wobei die bewegbare Verbindung von mindestens zwei benachbarten Sitzelementen (5) durch ein Scharnier (4) gebildet wird.

4. Anordnung nach Anspruch 3,
wobei sich ein Vorsprung (5) nach oben von dem Scharnier (4) und/oder als Teil des Scharniers (4) erstreckt, wodurch die Zonen abgegrenzt werden, wo eine Person auf den zwei benachbarten Sitzelementen (5) Platz nehmen kann.

5. Anordnung (1; 10; 11) mit Sitzen für mehrere Fahrzeuginsassen, insbesondere für Fahrzeuge des öffentlichen Verkehrs, wobei
- die Sitze durch in jedem Fall ein Sitzelement (5) gebildet sind, das eine Fläche oder Flächen definiert, auf der oder auf denen eine Person Platz nehmen kann,
- sich die Sitzelemente (5) in einer Längsrichtung erstrecken, wodurch sie eine erste Endzone und eine zweite Endzone definieren, wobei die erste und zweite Endzone an Enden des Sitzelements (5) angeordnet sind, die in Bezug auf die Längsrichtung einander gegenüberliegen,
**dadurch gekennzeichnet, dass**
- mindestens drei der Sitzelemente (5) in jedem Fall bewegbar mit einem oder zwei benachbarten Sitzelement(en) verbunden sind, wobei sich die Verbindung in der ersten oder zweiten Endzone der Sitzelemente (5) befindet,
- ein erstes der Sitzelemente (5) bewegbar mit einem zweiten der Sitzelemente (5) in der zweiten Endzone des ersten Sitzelements (5) und in der ersten Endzone des zweiten Sitzelements verbunden ist,
- das zweite der Sitzelemente (5) bewegbar mit einem dritten der Sitzelemente (5) in der zweiten Endzone des zweiten Sitzelements (5) und in der ersten Endzone des dritten Sitzelements verbunden ist,
- die Anordnung einen ersten Zustand umfasst, in dem das erste, das zweite und das dritte Sitzelement (5) erste Winkel in jedem Fall zwischen den Längsrichtungen der jeweiligen benachbarten Sitzelemente (5) definieren, so dass eine erste Person auf dem ersten Sitzelement Platz nehmen kann, eine zweite Person auf dem zweiten Sitzelement (5) Platz nehmen kann, und eine dritte Person auf dem dritten Sitzelement Platz nehmen kann,
- die Anordnung einen zweiten Zustand umfasst, in den das erste, das zweite und das dritte Sitzelement (5) relativ zueinander aus dem ersten Zustand bewegt werden können, und in dem das erste, das zweite und das dritte Sitzelement (5) zweite Winkel in jedem Fall zwischen den Längsrichtungen der jeweiligen benachbarten Sitzelemente (5) definieren, wobei die zweiten Winkel kleiner sind als der erste Winkel, so dass keine Person auf dem zweiten Sitzelement (5) sitzen oder daran lehnen kann, ohne auch auf dem ersten und/oder dritten Sitzelement zu sitzen oder daran zu lehnen.

6. Anordnung nach Anspruch 5,
wobei mindestens eines der Sitzelemente (5) von einem Träger getragen wird, der sich von dem Sitzelement (5) nach unten zu einer Basis erstreckt, um mit einem Boden verbunden zu werden.

7. Anordnung nach Anspruch 5 oder 6,
wobei die bewegbare Verbindung von mindestens zwei benachbarten Sitzelementen (5) durch ein Scharnier (4) gebildet wird.

8. Anordnung nach Anspruch 7,
wobei sich ein Vorsprung (5) nach oben von dem Scharnier (4) und/oder als Teil des Scharniers (4) erstreckt, wodurch die Zonen abgegrenzt werden, wo eine Person auf den zwei benachbarten Sitzelementen (5) Platz nehmen kann.

9. Fahrzeug, welches die Anordnung (11) nach einem der Ansprüche 1 bis 8 in einem Raum für den Transport von Insassen umfasst.

10. Verfahren zur Herstellung einer Anordnung (1; 9; 10; 11) mit Sitzen für mehrere Fahrzeuginsassen, insbesondere zur Herstellung der Anordnung nach einem der Ansprüche 1 bis 4, wobei
- die Sitze durch in jedem Fall ein Sitzelement (5) gebildet werden, das eine Fläche oder Flächen definiert, auf der oder auf denen eine Person Platz nehmen kann,
- die Sitzelemente (5) derart angeordnet werden, dass sie sich in einer Längsrichtung erstrecken, wodurch sie eine erste Endzone und eine zweite Endzone definieren, wobei die erste und zweite Endzone an Enden des Sitzelements (5) angeordnet werden, die in Bezug auf die Längsrichtung einander gegenüberliegen,
- mindestens zwei der Sitzelemente (5) in jedem Fall bewegbar mit einem oder zwei benachbarten Sitzelement(en) verbunden werden, wobei sich die Verbindung in der ersten oder zweiten Endzone der Sitzelemente (5) befindet,
- die Sitzelemente (5) derart miteinander verbunden werden, dass sie in einen ersten Zustand bewegt werden können, in dem ein erstes und ein zweites der Sitzelemente (5), die bewegbar miteinander verbundene benachbarte Sitzelemente (5) sind, einen ersten Winkel zwischen ihren Längsrichtungen definieren, so dass eine erste Person auf dem ersten Sitzelement (5) Platz nehmen kann, und eine zweite Person auf dem zweiten Sitzelement Platz nehmen kann,
- die Sitzelemente (5) derart miteinander verbunden werden, dass das erste und das zweite Sitzelement (5) relativ zueinander aus dem ersten Zustand in einen zweiten Zustand bewegt werden können, in dem das erste und das zweite Sitzelement (5) einen zweiten Winkel zwischen ihren Längsrichtungen definieren, wobei der zweite Winkel kleiner ist als der erste Winkel, so dass eine erste Person auf dem ersten Sitzelement (5) und gleichzeitig auch auf dem zweiten Sitzelement Platz nehmen kann.

11. Verfahren zur Herstellung einer Anordnung (1; 10; 11) mit Sitzen für mehrere Fahrzeuginsassen, insbesondere zur Herstellung der Anordnung nach einem der Ansprüche 5 bis 8, wobei
- die Sitze durch in jedem Fall ein Sitzelement (5) gebildet werden, das eine Fläche oder Flächen definiert, auf der oder auf denen eine Person Platz nehmen kann,
- die Sitzelemente (5) derart angeordnet werden, dass sie sich in einer Längsrichtung erstrecken, wodurch sie eine erste Endzone und eine zweite Endzone definieren, wobei die erste und zweite Endzone an Enden des Sitzelements (5) angeordnet werden, die in Bezug auf die Längsrichtung einander gegenüberliegen,
- mindestens drei der Sitzelemente (5) in jedem Fall bewegbar mit einem oder zwei benachbarten Sitzelement(en) verbunden werden, wobei sich die Verbindung in der ersten oder zweiten Endzone der Sitzelemente (5) befindet,
- ein erstes der Sitzelemente (5) bewegbar mit einem zweiten der Sitzelemente (5) in der zweiten Endzone des ersten Sitzelements (5) und in der ersten Endzone des zweiten Sitzelements verbunden wird,
- das zweite der Sitzelemente (5) bewegbar mit einem dritten der Sitzelemente (5) in der zweiten Endzone des zweiten Sitzelements (5) und in der ersten Endzone des dritten Sitzelements verbunden wird,
- die Sitzelemente (5) derart miteinander verbunden werden, dass sie in einen ersten Zustand bewegt werden können, in dem das erste, das zweite und das dritte Sitzelement (5) erste Winkel in jedem Fall zwischen den Längsrichtungen der jeweiligen benachbarten Sitzelemente (5) definieren, so dass eine erste Person auf dem ersten Sitzelement Platz nehmen kann, eine zweite Person auf dem zweiten Sitzelement (5) Platz nehmen kann, und eine dritte Person auf dem dritten Sitzelement Platz nehmen kann,
- die Sitzelemente (5) derart miteinander verbunden werden, dass das erste, das zweite und das dritte Sitzelement (5) relativ zueinander aus dem ersten Zustand in einen zweiten Zustand bewegt werden können, in dem das erste, das zweite und das dritte Sitzelement (5) zweite Winkel in jedem Fall zwischen den Längsrichtungen der jeweiligen benachbarten Sitzelemente (5) definieren, wobei die zweiten Winkel kleiner sind als der erste Winkel, so dass keine Person auf dem zweiten Sitzelement (5) sitzen oder daran lehnen kann, ohne gleichzeitig auch auf dem ersten und/oder dritten Sitzelement zu sitzen oder daran zu lehnen.

12. Verfahren nach Anspruch 10 oder 11,
wobei mindestens eines der Sitzelemente (5) von einem Träger getragen wird, der sich von dem Sitzelement (5) nach unten zu einer Basis erstreckt, um mit einem Boden verbunden zu werden.

13. Verfahren nach einem der Ansprüche 10 bis 12,
wobei die bewegbare Verbindung von mindestens zwei benachbarten Sitzelementen (5) durch ein Scharnier (4) gebildet wird.

14. Verfahren nach Anspruch 13,
wobei ein Vorsprung (5) derart gebildet wird, dass er sich nach oben von dem Scharnier (4) und/oder als Teil des Scharniers (4) erstreckt, wodurch die Zonen abgegrenzt werden, wo eine Person auf den zwei benachbarten Sitzelementen (5) Platz nehmen kann.

15. Verfahren zur Herstellung eines Fahrzeugs, welches das Verfahren nach einem der Ansprüche 10 bis 14 umfasst, wobei die Anordnung (11) innerhalb eines Raums für den Transport von Insassen montiert wird.

## Revendications

1. Agencement (1 ; 9 ; 10 ; 11) présentant des sièges pour une pluralité de passagers de véhicule, en particulier pour des véhicules de transport public, dans lequel
- les sièges sont formés dans chaque cas par un élément de siège (5) définissant une surface ou des surfaces, sur lesquelles une personne peut s'appuyer,
- les éléments de siège (5) s'étendent dans une direction longitudinale, définissant par là-même une première région d'extrémité et une deuxième région d'extrémité, les première et deuxième régions d'extrémité sont situées sur des extrémités de l'élément de siège (5) qui sont opposées l'une à l'autre par rapport à la direction longitudinale,
**caractérisé en ce que**
- au moins deux des éléments de siège (5) sont reliés de manière mobile dans chaque cas à un ou deux éléments de siège contigus, la liaison étant située dans la première ou deuxième région d'extrémité des éléments de siège (5),
- l'agencement comprend un premier état, dans lequel un premier et un deuxième des éléments de siège (5) qui sont des éléments de siège contigus (5) reliés de manière mobile les uns aux autres, définissent un premier angle entre leurs directions longitudinales de sorte qu'une première personne puisse s'appuyer sur le premier élément de siège (5) et une deuxième personne puisse s'appuyer sur le deuxième élément de siège (5),
- l'agencement comprend un deuxième état, dans lequel les premier et deuxième éléments de siège (5) peuvent être déplacés relativement l'un par rapport à l'autre du premier état et dans lequel les premier et deuxième éléments de siège (5) définissent un deuxième angle entre leurs directions longitudinales, le deuxième angle étant plus petit que le premier angle de sorte qu'une première personne puisse s'appuyer sur le premier élément de siège (5) et en même temps également sur le deuxième élément de siège (5).

2. Agencement selon la revendication 1, dans lequel au moins un des éléments de siège (5) est supporté par un support (3) s'étendant depuis l'élément de siège (5) vers le bas jusqu'à une base à relier à un sol (8).

3. Agencement selon la revendication 1 ou 2, dans lequel la liaison mobile d'au moins deux éléments de siège contigus (5) est formée par une articulation (4).

4. Agencement selon la revendication 3, dans lequel une saillie (5) s'étend vers le haut depuis l'articulation (4) et/ou comme une partie de l'articulation (4), délimitant par là-même les régions, dans lesquelles une personne peut s'appuyer sur les deux éléments de siège contigus (5) .

5. Agencement (1 ; 10 ; 11) présentant des sièges pour une pluralité de passagers de véhicule, en particulier pour des véhicules de transport public, dans lequel
- les sièges sont formés dans chaque cas par un élément de siège (5) définissant une surface ou des surfaces, sur lesquelles une personne peut s'appuyer,
- les éléments de siège (5) s'étendent dans une direction longitudinale, définissant par là-même une première région d'extrémité et une deuxième région d'extrémité, les première et deuxième régions d'extrémité sont situées sur des extrémités de l'élément de siège (5) qui sont en regard l'une de l'autre par rapport à la direction longitudinale,
**caractérisé en ce que**
- au moins trois des éléments de siège (5) sont reliés de manière mobile dans chaque cas à un ou deux éléments de siège contigus, la liaison étant située dans la première ou deuxième région des éléments de siège (5),
- un premier des éléments de siège (5) est relié de manière mobile à un deuxième des éléments de siège (5) dans la deuxième région d'extrémité du premier élément de siège (5) et dans la première région d'extrémité du deuxième élément de siège,
- le deuxième des éléments de siège (5) est relié de manière mobile à un troisième des éléments de siège (5) dans la deuxième région d'extrémité du deuxième élément de siège (5) et dans la première région d'extrémité du troisième élément de siège,
- l'agencement comprend un premier état, dans lequel les premier, deuxième et troisième éléments de siège (5) définissent des premiers angles dans chaque cas entre les directions longitudinales des éléments de siège contigus respectifs (5) de sorte qu'une première personne puisse s'appuyer sur le premier élément de siège, une deuxième personne puisse s'appuyer sur le deuxième élément de siège (5) et une troisième personne puisse s'appuyer sur le troisième élément de siège,
- l'agencement comprend un deuxième état, dans lequel les premier, deuxième et troisième éléments de siège (5) peuvent être déplacés relativement les uns par rapport aux autres du premier état et dans lequel les premier, deuxième et troisième éléments de siège (5) définissent des deuxièmes angles dans chaque cas entre les directions longitudinales des éléments de siège contigus respectifs (5), les deuxièmes angles étant plus petits que le premier angle de sorte qu'aucune personne ne puisse s'asseoir ou s'appuyer sur le deuxième élément de siège (5) sans s'asseoir ni s'appuyer aussi sur le premier et/ou troisième élément de siège.

6. Agencement selon la revendication 5, dans lequel au moins un des éléments de siège (5) est supporté par un support s'étendant depuis l'élément de siège (5) vers le bas jusqu'à une base à relier à un sol.

7. Agencement selon la revendication 5 ou 6, dans lequel la liaison mobile d'au moins deux éléments de siège contigus (5) est formée par une articulation (4).

8. Agencement selon la revendication 7, dans lequel une saillie (5) s'étend vers le haut depuis l'articulation (4) et/ou comme partie de l'articulation (4), délimitant par là-même les régions où une personne peut s'appuyer sur les deux éléments de siège contigus (5).

9. Véhicule comprenant l'agencement (11) selon l'une des revendications 1 à 8 dans un espace pour le transport des passagers.

10. Procédé de production d'un agencement (1 ; 9 ; 10 ; 11) présentant des sièges pour une pluralité de passagers de véhicule, en particulier pour la production de l'agencement selon l'une quelconque des revendications 1 à 4, dans lequel
- les sièges sont formés dans chaque cas par un élément de siège (5) définissant une surface ou des surfaces, sur lesquelles une personne peut s'appuyer,
- les éléments de siège (5) sont agencés de sorte à s'étendre dans une direction longitudinale, définissant par là-même une première région d'extrémité et une deuxième région d'extrémité, les première et deuxième régions d'extrémité sont situées sur des extrémités de l'élément de siège (5) qui sont en regard l'une de l'autre par rapport à la direction longitudinale,
- au moins deux des éléments de siège (5) sont reliés de manière mobile dans chaque cas à un ou deux éléments de siège contigus avec la liaison étant dans la première ou deuxième région des éléments de siège (5),
- les éléments de siège (5) sont reliés les uns aux autres de sorte qu'ils puissent être déplacés dans un premier état, dans lequel un premier et un deuxième des éléments de siège (5) qui sont des éléments de siège contigus (5) reliés de manière mobile l'un à l'autre, définissent un premier angle entre leurs directions longitudinales de sorte qu'une première personne puisse reposer sur le premier élément de siège (5) et une deuxième personne puisse reposer sur le deuxième élément de siège,
- les éléments de siège (5) sont reliés les uns aux autres de sorte que les premier et deuxième éléments de siège (5) puissent être déplacés relativement l'un par rapport à l'autre du premier état dans un deuxième état, dans lequel les premier et deuxième éléments de siège (5) définissent un deuxième angle entre leurs directions longitudinales, le deuxième angle étant plus petit que le premier angle de sorte qu'une première personne puisse s'appuyer sur le premier élément de siège (5) et en même temps aussi sur le deuxième élément de siège.

11. Procédé de production d'un agencement (1 ; 10 ; 11) présentant des sièges pour une pluralité de passagers de véhicule, en particulier pour la production de l'agencement selon l'une quelconque des revendications 5 à 8, dans lequel
- les sièges sont formés dans chaque cas par un élément de siège (5) définissant une surface ou des surfaces, sur lesquelles une personne peut s'appuyer,
- les éléments de siège (5) sont agencés de sorte à s'étendre dans une direction longitudinale, définissant par là-même une première région d'extrémité et une deuxième région d'extrémité, la première et deuxième régions d'extrémité sont situées sur des extrémités de l'élément de siège (5) qui sont en regard l'une de l'autre par rapport à la direction longitudinale,
- au moins trois des éléments de siège (5) sont reliés de manière mobile dans chaque cas à un ou deux éléments de siège contigus, la liaison étant située dans la première ou deuxième région des éléments de siège (5),
- un premier des éléments de siège (5) est relié de manière mobile à une deuxième des éléments de siège (5) dans la deuxième région d'extrémité du premier élément de siège (5) et dans la première région d'extrémité du deuxième élément de siège,
- le deuxième des éléments de siège (5) est relié de manière mobile à un troisième des éléments de siège (5) dans la deuxième région d'extrémité du deuxième élément de siège (5) et dans la première région d'extrémité du troisième élément de siège,
- les éléments de siège (5) sont reliés les uns des autres de sorte qu'ils puissent être déplacés dans un premier état, dans lequel les premier, deuxième et troisième éléments de siège (5) définissent des premiers angles dans chaque cas entre les directions longitudinales des éléments de siège contigus respectifs (5) de sorte qu'une première personne puisse s'appuyer sur le premier élément de siège, une deuxième personne puisse s'appuyer sur le deuxième élément de siège (5) et une troisième personne puisse s'appuyer sur le troisième élément de siège,
- les éléments de siège (5) sont reliés les uns des autres de sorte que les premier, deuxième et troisième éléments de siège (5) puisse être déplacés relativement les uns par rapport aux autres à partir du premier état dans un deuxième état, dans lequel les premier, deuxième et troisième éléments de siège (5) définissent des deuxièmes angles dans chaque cas entre les directions longitudinales des éléments de siège contigus respectifs (5), les deuxièmes angles étant plus petits que le premier angle de sorte qu'aucune personne ne puisse s'asseoir ou s'appuyer sur le deuxième élément de siège (5) sans s'asseoir ni s'appuyer aussi sur le premier et/ou troisième élément de siège.

12. Procédé selon la revendication 10 ou 11, dans lequel au moins un des éléments de siège (5) est supporté par un support s'étendant depuis l'élément de siège (5) vers le bas jusqu'à une base à relier à un sol.

13. Procédé selon l'une des revendications 10 à 12, dans lequel la liaison mobile d'au moins deux éléments de siège contigus (5) est formée par une articulation (4).

14. Procédé selon la revendication 13, dans lequel une saillie (5) est formée de sorte à s'étendre vers le haut depuis l'articulation (4) et/ou comme une partie de l'articulation (4), délimitant par là-même les régions où une personne peut s'appuyer sur les deux éléments de siège contigus (5).

15. Procédé de production d'un véhicule comportant le procédé selon l'une des revendications 10 à 14, dans lequel l'agencement (11) est monté dans un espace pour le transport de passagers.
